# EUROPEAN PATENT SPECIFICATION

(11) **EP 1 481 023 B1**
(45) Date of publication and mention of the grant of the patent: **04.07.2007**
(21) Application number: 03706366.6
(22) Date of filing: 21.01.2003
(51) Int. Cl.: C08K 5/20, C08L 95/00

(54) **PIGMENTABLE BINDER COMPOSITION**
PIGMENTIERBARE BINDEMITTEL-ZUSAMMENSETZUNG
COMPOSITION DE LIANT PIGMENTABLE

(30) Priority: 23.01.2002 EP 02250453
(43) Date of publication of application: 01.12.2004
(73) Proprietor: SHELL INTERNATIONALE RESEARCH MAATSCHAPPIJ B.V., 2596 HR Den Haag (NL)
(72) Inventor: ANDERSEN, Eivind, Olav, N-0277 Oslo (NO)
(86) International application number: PCT/EP2003/000585
(87) International publication number: WO 2003/062315

(56) References cited:
- EP-A- 0 330 281
- WO-A-00/73378
- CA-A- 1 260 653
- US-A- 3 808 164
- US-A- 4 325 850
- US-A- 4 554 023
- DATABASE WPI Section Ch, Week 200212 Derwent Publications Ltd., London, GB; Class A13, AN 2002-085542 XP002205716 & JP 2001 253988 A (TOYO INK MFG CO LTD), 18 September 2001 (2001-09-18)
- PATENT ABSTRACTS OF JAPAN vol. 013, no. 579 (C-668), 20 December 1989 (1989-12-20) & JP 01 242667 A (HITACHI CHEM CO LTD), 27 September 1989 (1989-09-27)

## Description

The present invention relates to a pigmentable binder composition and a synthetic asphalt comprising a pigmentable binder composition.

### Background of the Invention

Bitumen is a widely used civil engineering material. The principal use of bitumen is in the construction of road and pavement surfaces, wherein a bituminous binder is mixed with aggregate to form asphalt. Bitumen is also used in industrial applications e.g. as a roofing material or a pipe coating.

Bituminous materials are generally black or brown in appearance; bitumen generally being a residual product obtainable from the refining of crude oil. The appearance of bituminous road or pavement surfaces is considered acceptable for most applications. However, in some locations it is desirable to have a surface in a specific colour, for example to denote cycle paths, bus lanes, pedestrian zones, or play areas etc. Further, in certain applications such as tunnel road surfaces it is preferred to have a very light coloured surface in order to improve visibility.

The colour of bituminous materials may be modified by adding a pigment such as iron oxide and/or by use of coloured aggregates. However, the only acceptable colour that can be achieved in this way is red. Further, where a pigment is used a large quantity of pigment is often required to achieve the desired effect.

To overcome this problem pigmentable binder compositions based upon non-bituminous constituents such as resins, lubricating oils, lubricating oil extracts and polymers have been developed. Pigmentable binders are defined as non-bituminous binders that may be coloured by the addition of pigments or coloured aggregate. Whilst the chemical composition of pigmentable binders is very different to bitumen, pigmentable binders have rheological properties similar to those of bituminous binders but have the advantage that they may be pigmented into a wide range of colours. Examples of known pigmentable binders are described in GB 1226234, EP-A 0179510 and EP-A 0330281. Pigmentable binders are sometimes referred to as synthetic binders as they do not contain asphaltenes (asphaltenes being the constituent of bitumen giving it its black colouring) and asphalts prepared from pigmentable binders may be referred to as synthetic asphalts.

For certain applications such as indoor floorings it is advantageous to apply a surfacing as a.mastic asphalt. Mastic asphalt is a particular type of binder/aggregate mixture that is hand-laid by workers who use wooden floats to work the material into shape at high temperature. When laying conventional mastic asphalt, it is necessary for the mixture of binder and aggregate to be heated to extremely high temperatures of up to 240 °C in order to ensure good workability. Such high application temperatures do not adversely affect the properties of bituminous binders. However, the constituents of pigmentable binders are susceptible to decomposition when heated to such high temperatures, and this has caused difficulties in the preparation of coloured mastic asphalt, in particular when using polymer-modified pigmentable binders.

Therefore, it would be advantageous if there was a pigmentable binder which had a relatively low workability temperature as well as good rheological properties.

JPA 2001-253988 describes a colouring resin having plate-out resistant characteristics. Plate-out is a phenomena associated with extrusion moulding which results in the formation of scratches and defects in the appearance of a moulding. The colouring resin of JPA 2001-253988 contains a styrene-based resin, a pigment, a fatty acid and a metal soap. The fatty acid amide and metal soap are added as dispersing agents to disperse the pigment uniformly in the resin, a specified ratio of amide to metal soap being required to prevent plate-out and to ensure that the pigment is uniformly dispersed. The colouring resins of JPA 2001-253988 are for use in extrusion moulding and would be unsuitable as binders in synthetic asphalt.

JPA 01-242667 relates to a road marking material that may be used in both hot and cold conditions. The marking materials of JPA 01-242667 contain a binder resin and a bisamide of specific melting point, the bisamide apparently being incorporated to improve the drying properties and contamination resistance of the material in hot conditions, and the cracking properties in cold conditions. JPA 01-242667 describes a road marking material: no mention is made of synthetic asphalt compositions or pigmentable binders for use therein.

### Summary of the invention

It has now surprisingly been found possible to lower the workability temperature of a pigmentable binder without adversely affecting its rheological properties, by incorporating into the binder a small amount of a particular type of amide additive.

Accordingly, the present invention provides a pigmentable binder composition for use in synthetic asphalt, which composition comprises a petroleum resin; in the range of from 20 to 97% wt based on total composition of a lubricating oil and/or a lubricating oil extract, and in the range of from 0.05 to less than 3 % wt based on total composition of an amide additive of general formula:

R¹-CO-NH-(CH₂)ₓ-NH-CO-R² (I),

wherein R¹ and R² each independently represent alkyl groups having in the range of from 10 to 60 carbon atoms, and x is an integer in the range of from 1 to 4.

### Detailed description of the invention

The pigmentable binder composition of the present invention preferably comprises in the range of from 1 to 70 % wt of a petroleum resin, more preferably 10 to 60 % wt, even more preferably 20 to 55 % wt, and most preferably 30 to 50 % wt, based on total composition.

Resins that'may be conveniently utilised include petroleum resins prepared by polymerisation of unsaturated hydrocarbons present in unsaturated petroleum fractions, such as thermally cracked fractions and unsaturated hydrocarbons obtained from pyrolysis of hydrocarbons.

Preferably, the pigmentable binder of the present invention comprises an acidic resin having an acid value in the range of from 0.5 to 200 mg KOH/g, more preferably 1 to 100 mg KOH/g, and most preferably 1 to 50 mg KOH/g.

Preferred acidic resins according to the present invention are modified resins based on petroleum resins, said resins having been modified so as to comprise carboxylic acid, carboxylic acid anhydride or hydroxyl groups; resins comprising carboxylic acid or carboxylic acid anhydride groups being most preferred.

Such modified resins are obtainable by treating petroleum resins with unsaturated carboxylic acids or carboxylic acid anhydrides, or by mild oxidation. Alternatively, such modified resins may be obtained by modification of the resin preparation process, e.g. by copolymerisation of the unsaturated hydrocarbons in the presence of unsaturated carboxylic acids or anhydrides, or in the presence of hydroxyl group-containing unsaturated carboxylic acids or esters thereof, such as hydroxyethylmethacrylate.

Most preferably the resin is a modified petroleum resin obtainable by treating a petroleum resin with maleic anhydride.

Neutral resins, such as NL 140 obtainable from Nevcin Polymers B.V.and Hikotack P140 obtainable from Kolon Chemicals Co. Ltd., may also be used, for example in combination with an acidic resin in order to adjust the acid value of the resin component.

The pigmentable binder composition of the present invention comprises in the range of from 20 to 97 % wt of a lubricating oil and/or a lubricating oil extract, preferably 30 to 90 % wt, more preferably 40 to 80 % wt, and most preferably 50 to 70 % wt, based on total composition.

A wide range of lubricating oils and/or lubricating oil extracts may be included in the pigmentable binder compositions of the present invention.

Lubricating oils which may be conveniently employed include those obtained by the distillation of crude oil or oils obtained from plants, seeds etc, e.g. vegetable oils.

Preferably, the lubricating oil and/or lubricating oil extract is a lubricating oil extract obtained by solvent extraction of a lubricating oil, most preferably by solvent extraction of a deasphalted oil (i.e. a lubricating oil obtained by the removal of asphaltenes from a residue of crude oil distillation). Lubricating oil extracts obtained by solvent extraction of a deasphalted oil are known in the art as Bright-Stock extracts, and may be obtained for example by solvent extraction of the deasphalted oil with phenol, N-methyl pyrolidone, liquid sulphur dioxide, either alone or in combination with an aromatic compound, such as benzene, or furfural.

Most preferably the lubricating oil and/or lubricating oil extract is a Bright-Stock furfural extract.

Of course, known resin-lubricating oil combinations may be utilised in the composition of the present invention. A very suitable product is sold by the Royal Dutch/Shell Group of companies under the trade name "Mexphalte C".

The pigmentable binder composition of the present invention preferably comprises in the range of 0.1 to less than 3 % wt of an amide additive of general formula

R¹-CO-NH-(CH₂)ₓ-NH-CO-R² (I),

wherein R¹ and R² each independently represent alkyl groups having in the range of from 10 to 60 carbon atoms, and x is an integer in the range of from 1 to 4; more preferably in the range of from 0.1 to 2.5 % wt, even more preferably 0.1 to 2.0 % wt, and most preferably 0.1 to 1.5 % wt, based on total composition.

Preferably, R¹ and R² each independently represent alkyl groups having in the range of from 12 to 30 carbon atoms, more preferably 14 to 20 carbon atoms. Preferably, x is an integer in the range of from 2 to 4. Most preferably x is 2 (i.e. (CH₂)ₓ most preferably represents an ethylene group).

An amide additive that has been found to give particularly good results when employed in the pigmentable binders of the present invention is ethylene bis-stearamide, i.e. wherein in general formula (I) X is 2 and R¹ and R² each independently represent alkyl groups having 17 carbon atoms. Accordingly, it is preferred that the amide additive of general formula (I) is an ethylene bis-stearamide.

Amide additives of general formula (I) may be prepared by known chemistry, or obtained from commercial suppliers. An example of a preferred amide additive of general formula (I) is obtainable from Henkel KGaA under the designation "Loxamid EBS" or from Croda under the designation "Crodamid EBS".

In a preferred embodiment of the present invention the pigmentable binder composition further comprises a polymer. The present invention is of particular benefit when applied to such polymer-modified pigmentable binder compositions as the polymeric components of the composition are particularly susceptible to decomposition at high temperature.

Polymers that may be conveniently employed in the compositions of the present invention include natural or synthetic rubbers, e.g. optionally hydrogenated, linear or branched (e.g. radial) block copolymers of styrene and a conjugated diene (e.g. butadiene or isoprene); and thermoplastic polymers (plastomers) such as polypropylene, ethylene vinyl-acetate copolymers, polyvinyl chloride and polystyrene.

Preferred polymers for use in the present invention are thermoplastic rubbers, most preferably block copolymers comprising'at least two terminal poly(monovinyl aromatic hydrocarbon) blocks and at least one central poly(conjugated diene) block, forming a continuous network, e.g. styrene-butadiene-styrene (SBS) or styreneisoprene-styrene (SIS) block copolymers.

The pigmentable binder composition of the present invention preferably comprises in the range of from 1 to 15 % wt of a polymer, more preferably 3 to 12% wt, and most preferably 5 to 10 % wt, based on total composition.

The compositions of the present invention may comprise a single type of polymer or a combination of two or more types of polymer. In a further preferred embodiment of the present invention, the compositions comprise a thermoplastic rubber and a plastomer, more preferably a styrene-butadiene-styrene block copolymer and an ethylene vinyl-acetate block copolymer or an atactic polypropylene. When the compositions of the present invention comprise both a thermoplastic rubber and a plastomer the amount of thermoplastic rubber is preferably in the range of from 3 to 10 % wt; and the amount of plastomer is preferably in the range of from 2 to 5 % wt, based on total composition.

The pigmentable binder of the present invention may further comprise minor proportions of other ingredients commonly used in pigmentable binder compositions such as tackifiers, e.g. lithium salts of C₁₀₋₄₀ (hydroxy) fatty acids. Preferably, the pigmentable binder compositions do not contain any substantial amount (i.e. greater than 1 % wt) of bitumen, and most preferably contain no bitumen.

The pigmentable binders of the present invention, may be conveniently mixed with aggregate to form synthetic asphalt compositions. Accordingly, the present invention further provides a synthetic asphalt comprising a mixture of aggregate and a pigmentable binder composition which comprises a petroleum resin in the range of from 20 to 97% wt based on total composition of a lubricating oil and/or a lubricating oil extract, and in the range of from 0.05 to less than 3 % wt based on total composition of an amide additive of general formula:

R¹-CO-NH-(CH₂)ₓ-NH-CO-R² (I),

wherein R¹ and R² each independently represent alkyl groups having in the range of from 10 to 60 carbon atoms, and x is an integer in the range of from 1 to 4. Preferred pigmentable binders described hereinabove with regard to the pigmentable binder of the invention are similarly preferred with regard to the synthetic asphalt of the invention.

The amount of pigmentable binder in the synthetic asphalt of the present invention may vary depending on the application for which the synthetic asphalt is to be used. For example, synthetic mastic asphalt compositions will typically contain a larger amount of binder than a continuously graded asphalt. However, the synthetic asphalt of the present invention preferably comprises in the range of from 1 to 15 % wt of pigmentable binder, based on total synthetic asphalt.

A wide range of aggregate type and size distribution may be present in the synthetic asphalt composition of the invention. Suitable aggregates include stones, sand and fillers such as mineral dust and ground limestone. Conveniently the aggregate employed in the synthetic asphalt of the present invention may be a combination of filler (particles having a particle size of less than 63 micrometers) and larger aggregates such as sand (particle sizes of from 63 micrometers to 2 mm) and stones (particles sizes of greater than 2 mm, preferably in the range of from 2 to 20 mm).

In order to impart a particular colour to the asphalt, the synthetic asphalt composition may further comprise from 0.01 to 10 % wt of a pigment, preferably 0.02 to 2 % wt, based on total synthetic asphalt composition. Pigments which may be conveniently used include red and yellow iron oxides, titanium oxide (white), chromex green, and cobalt blue.

Mastic asphalt is a type of asphalt that contains a large proportion of filler. The high percentage of filler gives mastic asphalt a smooth surface. Further, mastic asphalt is a largely impermeable material, the void content of mastic asphalt generally being below 1%. These properties make mastic asphalt a good material for use as indoor and industrial flooring. However, the high filler content means it is generally necessary to heat a mastic asphalt mix to a very high temperature before it becomes workable for application. Accordingly the present invention, which allows workability temperatures to be lowered, is particularly advantageous for use with synthetic mastic asphalt. Therefore, in a preferred aspect of the present invention the synthetic asphalt is mastic asphalt.

When the synthetic asphalt of the present invention is a mastic asphalt it is preferred that the amount of filler in the asphalt is at least 15% wt, based on total synthetic asphalt, more preferably at least 20% wt, even more preferably at least 25% wt and most preferably in the range of from 25 to 40% wt. Further, when the synthetic asphalt of the present invention is mastic asphalt it is preferred that the amount of pigmentable binder composition is at least 5% wt, more preferably.at least 6% wt and most preferably in the range of from 6 to 15 %wt, based on total synthetic asphalt composition. The present invention further provides for the use of a pigmentable binder according to the present invention in synthetic mastic asphalt.

The invention will be further understood from the following illustrative examples.

### Examples 1-3

In Examples 1-3 the various materials/additives are designated as follows:-
i) "Mexphalte CP2" is a commercial polymer-modified pigmentable binder obtainable from member companies of the Royal Dutch/Shell Group. ("Mexphalte" is a trade mark). This binder comprises a modified petroleum resin having an acid value in the range of from 10-16 mg KOH/g, a Bright-Stock furfural extract, and approximately 9 % wt of polymeric components.
ii) "EBS" is a commercial ethylene bis-stearamide obtainable under the designation "Loxamid EBS" from "Henkel KGaA".

Three separate batches of "Mexphalte CP2" were each blended at a temperature of 140 to 145 °C, with a respective 1.0% wt, 1.5 % wt and 2.0 % wt of EBS, based on total binder composition, (Examples 1, 2 and 3).

The properties of the untreated "Mexphalte CP2" (Comparative Example A) and EBS-containing compositions are shown in Table 1 (penetration values were determined at 25 °C according to EN 1426; softening points were determined according to EN 1427; and viscosity measured at 180 °C using a Dynamic Shear Rheometer.)

Subsequently, synthetic mastic asphalt mixes were prepared by adding each of the pigmentable binder compositions described above to a respective batch of hot aggregate mixture. The amount of synthetic binder used in each synthetic asphalt mix was 7.3 % wt, based on total composition, and the aggregate used comprised:
28.0 %wt filler
20.9 %wt 0-4 mm aggregate
16.9 %wt 2-6 mm aggregate
26.9 %wt 6-8 mm aggregate

In addition, coloured synthetic mastic asphalt mixes were prepared in the same manner as the above asphalt mixes but with the addition of 2.4 % wt of a green pigment or of a red pigment in place of a respective amount of filler. The green pigment used was Cr₂O₃ obtainable from Bayer under the trade name Chrome Oxide Green GN. The red pigment used was Fe₂O₃ obtainable from Bayer under the trade name Bayferrox 130.

The workability of each of the synthetic mastic asphalts and coloured synthetic asphalt mixes was determined as follows.

The synthetic mastic asphalt mixes were placed in a heated vessel fitted with a thermocouple and an electric stirrer. The electric stirrer was connected to apparatus for measuring the torque required to stir the synthetic mastic asphalt mixes, the torque being calculated by means of a computer program that converts the data recorded at the stirrer into a torque value.

In order to compare the workability of the different synthetic asphalt mixes, each of the mixes was stirred at a constant rate (17 rev. min⁻¹) whilst the temperature of the mix was increased and the torque required in order to maintain the constant stirring rate recorded. In this way a correlation between torque and asphalt temperature was established for each of the mixes, and from this the temperature to which each of the synthetic mastic asphalt samples needed be heated in order for them to have the same workability was determined.

The workability temperatures for each of the mixtures are shown in Table 1 wherein:-
a) workability temperature 1 is the temperature to which the synthetic mastic asphalt compositions needed to be heating in order to stir them at a rate of 17 rev. min⁻¹, using a torque of 50 Ncm; and
b) workability temperature 2 is the temperature to which the coloured synthetic mastic asphalt compositions needed to be heated in order to stir them at a rate of 17 rev.min⁻¹, using a torque of 35 Ncm.

**TABLE 1**

| | Ex. A | Ex. 1 | Ex. 2 | Ex. 3 |
|---|---|---|---|---|
| Binder | | | | |
| "MEXPHALTE CP2" (% wt) | 100 | 99.0 | 98.5 | 98.0 |
| EBS (% wt) | 0 | 1.0 | 1.5 | 2.0 |
| Penetration (dmm) | 41 | 43 | 41 | 46 |
| Softening point (°C) | 54 | 58 | 66 | 64 |
| Viscosity at 180°C (mPas) | 214 | 196 | 190 | 178 |

| Synthetic asphalt | | | | |
|---|---|---|---|---|
| Workability temp. 1 (°C) | 234 | 214 | 224 | 214 |

| Green synthetic asphalt | | | | |
|---|---|---|---|---|
| Workability temp. 2 (°C) | 245 | 226 | 230 | 218 |

| Red synthetic asphalt | | | | |
|---|---|---|---|---|
| Workability temp. 2 (°C) | 255 | 243 | 238 | 233 |

From Table 1 it can be seen that the pigmentable binders according to the invention (Examples 1-3) have very similar penetration values to the untreated pigmentable binder (Comparative Example A). Further, it can be seen that the synthetic mastic asphalt compositions prepared from these binders have an improved workability; the temperature to which the synthetic mastic asphalt compositions according to the invention need to be heated being in the order of 20 °C lower than those required to attain the same workability with the comparative compositions.

The above are data provided under laboratory conditions. It is believed that the compositions of the invention when used on a larger scale will enable workability temperatures of the order of less than 200 °C, and potentially less than 180 °C, to be achieved without significant change of rheological properties.

## Claims

1. Pigmentable binder composition for use in synthetic asphalt, which composition comprises a petroleum resin, in the range of from 20 to 97 % wt based on total composition of a lubricating oil and/or a lubricating oil extract, and in the range of from 0.05 to less than 3 % wt based on total composition of an amide additive of general formula:
R¹-CO-NH-(CH₂)ₓ-NH-CO-R² (I),
wherein R¹ and R² each independently represent alkyl groups having in the range of from 10 to 60 carbon atoms, and x is an integer in the range of from 1 to 4.

2. Pigmentable binder composition as claimed in claim 1, which further comprises a polymer.

3. Pigmentable binder composition as claimed in claim 1 or claim 2, wherein the resin is an acidic resin, having an acid value in the range of from 0.5 to 200 mg KOH/g.

4. Pigmentable binder composition as claimed in any one of claims 1 to 3 wherein the resin is a modified petroleum resin comprising carboxylic acid, carboxylic acid anhydride or hydroxyl groups.

5. Pigmentable binder composition as claimed in claim 4, wherein the resin is a modified petroleum resin obtainable by treating a petroleum resin with maleic anhydride.

6. Pigmentable binder composition as claimed in any one of claims 1 to 5, wherein the lubricating oil and/or lubricating oil extract is a Bright-Stock extract.

7. Pigmentable binder composition as claimed in any one of claims 1 to 6, wherein the amide additive of general formula (I) is an ethylene bis-stearamide.

8. Pigmentable binder composition as claimed in any one of claims 1 to 7, which comprises in the range of from 1 to 70 % wt of a resin; 20 to 97 % wt of a lubricating oil and/or a lubricating oil extract; 0.1 to less than 3 % wt of an amide additive of general formula (I); and optionally in the range of from 1 to 15 % wt of a polymer, all weights based on total composition.

9. Synthetic asphalt comprising a mixture of aggregate and a pigmentable binder as claimed in any one of claims 1 to 8.

10. Use of a pigmentable binder composition as claimed in any one of claims 1 to 8 in synthetic mastic asphalt.

## Patentansprüche

1. Pigmentierbare Bindemittelzusammensetzung zur Verwendung in synthetischem Asphalt, welche Zusammensetzung ein Mineralölharz, im Bereich von 20 bis 97 Gew.-%, bezogen auf die gesamte Zusammensetzung von einem Schmieröl und/oder einem Schmierölextrakt, und im Bereich von 0,05 bis weniger als 3 Gew.-%, bezogen auf die gesamte Zusammensetzung, von einem Amidadditiv der allgemeinen Formel:
R¹-CO-NH-(CH₂)ₓ-NH-CO-R² (I)
umfaßt, worin R¹ und R² jeweils unabhängig Alkylgruppen mit im Bereich von 10 bis 60 Kohlenstoffatomen darstellen und x eine ganze Zahl im Bereich von 1 bis 4 darstellt.

2. Pigmentierbare Bindemittelzusammensetzung nach Anspruch 1, welche ferner ein Polymer umfaßt.

3. Pigmentierbare Bindemittelzusammensetzung nach Anspruch 1 oder Anspruch 2, worin das Harz ein saures Harz ist, welches eine Säurezahl im Bereich von 0,5 bis 200 mg KOH/g aufweist.

4. Pigmentierbare Bindemittelzusammensetzung nach einem der Ansprüche 1 bis 3, worin das Harz ein modifiziertes Mineralölharz ist, umfassend Carbonsäure-, Carbonsäureanhydrid- oder Hydroxylgruppen.

5. Pigmentierbare Bindemittelzusammensetzung nach Anspruch 4, worin das Harz ein modifiziertes Mineralölharz ist, welches durch Behandlung eines Mineralölharzes mit Maleinsäureanhydrid erhältlich ist.

6. Pigmentierbare Bindemittelzusammensetzung nach einem der Ansprüche 1 bis 5, worin das Schmieröl und/oder der Schmierölextrakt ein Bright-Stock-Extrakt ist.

7. Pigmentierbare Bindemittelzusammensetzung nach einem der Ansprüche 1 bis 6, worin das Amidadditiv der allgemeinen Formel (I) ein Ethylen-bis-stearamid ist.

8. Pigmentierbare Bindemittelzusammensetzung nach einem der Ansprüche 1 bis 7, welche im Bereich von 1 bis 70 Gew.-% von einem Harz, 20 bis 97 Gew.-% von einem Schmieröl und/oder einem Schmierölextrakt, 0,1 bis weniger als 3 Gew.-% von einem Amidadditiv der allgemeinen Formel (I) und wahlweise im Bereich von 1 bis 15 Gew.-% von einem Polymer umfaßt, wobei alle Gewichtsprozente auf die gesamte Zusammensetzung bezogen sind.

9. Synthetischer Asphalt, umfassend eine Mischung von Aggregat und einem pigmentierbaren Bindemittel nach einem der Ansprüche 1 bis 8.

10. Verwendung einer pigmentierbaren Bindemittelzusammensetzung nach einem der Ansprüche 1 bis 8 in einem synthetischen Gußasphalt.

## Revendications

1. Composition de liant pigmentable utilisable dans de l'asphalte synthétique, laquelle composition comprend une résine de pétrole, à raison de 20 à 97 % en poids par rapport à la composition totale d'une huile lubrifiante et/ou d'un extrait d'huile lubrifiante, et à raison de 0,05 à moins de 3 % en poids par rapport à la composition totale d'un additif d'amide de formule générale :
R¹-CO-NH-(CH₂)ₓ-NH-CO-R² (I)
dans laquelle R¹ et R² représentent chacun indépendamment des groupes alkyle comportant de 10 à 60 atomes de carbone, et x est un nombre entier allant de 1 à 4.

2. Composition de liant pigmentable suivant la revendication 1, qui comprend de plus un polymère.

3. Composition de liant pigmentable suivant la revendication 1 ou la revendication 2, dans laquelle la résine est une résine acide, ayant un indice d'acide allant de 0,5 à 200 mg de KOH/g.

4. Composition de liant pigmentable suivant l'une quelconque des revendications 1 à 3, dans laquelle la résine est une résine de pétrole modifiée comprenant des groupes acide carboxylique, anhydride d'acide carboxylique ou hydroxyle.

5. Composition de liant pigmentable suivant la revendication 4, dans laquelle la résine est une résine de pétrole modifiée obtenable en traitant une résine de pétrole par de l'anhydride maléique.

6. Composition de liant pigmentable suivant l'une quelconque des revendications 1 à 5, dans laquelle l'huile lubrifiante et/ou l'extrait d'huile lubrifiante est un extrait de Bright-Stock.

7. Composition de liant pigmentable suivant l'une quelconque des revendications 1 à 6, dans laquelle l'additif d'amide de formule générale (I) est un éthylène bis-stéaramide.

8. Composition de liant pigmentable suivant l'une quelconque des revendications 1 à 7, qui comprend de 1 à 70 % en poids d'une résine, 20 à 97 % en poids d'une huile lubrifiante et/ou d'un extrait d'huile lubrifiante, 0,1 à moins de 3 % en poids d'un additif d'amide de formule générale (I), et éventuellement de 1 à 15. % en poids d'un polymère, tous les poids étant pris par rapport à la composition totale.

9. Asphalte synthétique comprenant un mélange d'agrégat et d'un liant pigmentable suivant l'une quelconque des revendications 1 à 8.

10. Utilisation d'une composition de liant pigmentable suivant l'une quelconque des revendications 1 à 8 dans de l'asphalte coulé synthétique.
